# EUROPÄISCHE PATENTSCHRIFT

(11) **EP 0 482 353 B1**
(45) Veröffentlichungstag und Bekanntmachung des Hinweises auf die Patenterteilung: **20.11.1996**
(21) Anmeldenummer: 91115896.2
(22) Anmeldetag: 19.09.1991
(51) Int. Cl.: F41G 7/22, G02B 26/08, G02B 7/182, G02B 26/10

(54) **Sucher zur Abtastung eines Gesichtsfeldes**
Viewfinder for scanning a visual field
Viseur pour balayer un champ visuel

(30) Priorität: 25.10.1990 DE 4033948
(43) Veröffentlichungstag der Anmeldung: 29.04.1992
(73) Patentinhaber: Bodenseewerk Gerätetechnik GmbH, 88662 Überlingen (DE)
(72) Erfinder: Steimel, Johannes Karl, D-7311 Neidlingen (DE)
(74) Vertreter: Wolgast, Rudolf, Dipl.-Chem. Dr.

(56) Entgegenhaltungen:
- EP-A- 0 114 201
- WO-A-88/01041
- DE-A- 1 803 608
- GB-A- 2 103 824
- US-A- 4 867 548

## Beschreibung

Die Erfindung betrifft einen Sucher, bei welchem ein Gesichtsfeld durch ein optisches Abtastsystem mit einem feststehenden Detektor und wenigstens einem schwingbeweglichen Spiegel durch eine begrenzte Lichtdurchtrittsöffnung hindurch abtastbar ist.

Insbesondere bezieht sich die Erfindung darauf, daß über das optische Abtastsystem bei einem Flugkörper ein in Flugrichtung des Flugkörpers liegendes Gesichtsfeld durch ein seitlich von der Spitze des Flugkörpers vorgesehenes, zur Längsachse des Flugkörpers geneigtes Fenster hindurch abtastbar ist.

Der Sucher eines Flugkörpers soll ein annähernd in Flugrichtung befindliches Ziel verfolgen. Es besteht jedoch manchmal die Notwendigkeit, einen weiteren, nach einem anderen Prinzip arbeitenden Sucher an dem Flugkörper vorzusehen. Beispielsweise soll außer einem Infrarot-Sucher noch ein Radar-Sucher vorgesehen werden.

Es ist bekannt, in solchen Fällen den Radar-Sucher in der Flugkörperspitze anzuordnen, während der Infrarot-Sucher durch ein schräg zur Flugkörperlängsachse angeordnetes, ebenes, seitliches Fenster annähernd in Flugrichtung befindliche Ziele auffassen und verfolgen soll. Dabei ergeben sich jedoch für den Infrarot-Sucher technische und geometrische Probleme.

Es ist bekannt, zur Abtastung des Gesichtsfeldes einmal einen um eine Nickachse schwingbeweglichen Spiegel vorzusehen und als zweite Achse des Suchers die Rollachse des Flugkörpers zu benutzen. Dabei muß aber die Rollage des Flugkörpers sehr genau und mit hoher Dynamik nachgeführt werden, was technische Probleme mit sich bringt.

Es ist weiterhin bekannt, an dem Sucher zwei schwingbewegliche Spiegel vorzusehen, über welche der Strahlengang des Suchers geleitet wird und von denen der eine um eine Nickachse und der andere um eine Gierachse schwingt.

Eine ähnliche Anordnung ist für eine Fernsehkamera aus der US-A-3 589 792 bzw. DE-A-1 803 608 bekannt.

Bei einer anderen bekannten Anordnung sitzen die abbildende Optik des Suchers und der Detektor auf einem Rahmensystem, das eine Bewegung um eine Nick- und eine Gierachse zuläßt. Dieses Rahmensystem ist auf einem Schlitten in der Längsachse des Flugkörpers verschiebbar.

Die drei letztgenannten Anordnungen haben den Nachteil, daß ein extrem breites Fenster verwendet werden müßte, um ausreichende Schielwinkel um die Gierachse zu erreichen. Anderenfalls würde die Leistungsfähigkeit des optischen Systems eingeschränkt.

Aus der US-A-4 717 822 bzw. WO-A-88/01041 ist ein Sucher zum rosettenförmigen Abtasten eines großen Gesichtsfeldes bekannt. Bei dieser Anordnung rotieren Detektor und optische Abbildungsmittel um eine erste Achse, so daß die Sichtlinien einen Kegel bilden, der abgestastet wird. Durch Rotation der gesamten Anordnung um eine zweite Achse wird es möglich die Hemisphäre vollständig zu erfassen.

Eine ähnliche Vorrichtung ist auch aus der US-PS 4 917 330 bekannt. Das optische Abtastsystem rotiert ebenfalls um eine Achse. Die Lichtdurchtrittsöffnung erstreckt sich hier im wesentlichen senkrecht zur Längsachse des Flugkörpers, so daß eine Rotation um eine weitere Achse hier nicht notwendig wird. Allerdings hat die Flugkörperspitze dadurch keinen weitern Raum für andere Detektionsmittel, wie Radarsucher.

Aus der GB 21 03 824 A ist zur weitwinkligen Abtastung eines Gesichtsfeldes die Verwendung zweier um parallele Achsen schwenkbarer Spiegel bekannt. Zum Abtasten in einer zweiten Ebene wäre eine Schwenkbewegung des gesamten Gerätes erforderlich.

Die EP-A-0 114 201 beschreibt einen Antrieb für einen um eine Schwingachse beweglichen Schwingspiegel für optische Geräte, der mit einer Taumelkoppelanordnung vorgesehen ist. Der Spiegel tastet ein Gesichtsfeld ab, indem er um eine Achse schwingt. Dabei ist der Schwingspiegel über über eine Koppel, die zwischen Antriebsglied und Schwingspiegel angeordnet ist, taumelbar angelenkt.

In der US-A-4 867 548 wird ein Abtastsystem mit einem Spiegel beschrieben, der um zwei zueinander senkrechten Achsen schwenkbar ist. Dabei wird die eine Achse Zeilen- und die andere für die Spaltenabfrage verwendet. Eine Vergrößerung des Schielwinkels würde auch hier eine Vergrößerung des Sichtfensters bedeuten.

Der Erfindung liegt die Aufgabe zugrunde, einen Sucher der eingangs genannten Art so auszubilden, daß er einen großen Schielwinkel um die Gierachse ohne entsprechende Vergrößerung der Lichtdurchtrittsöffnung gestattet.

Erfindungsgemäß wird diese Aufgabe dadurch gelöst, daß der schwingbewegliche Spiegel durch einen Antriebsmechanismus derart um zwei Achsen koordiniert antreibbar ist, daß die eine Abtastbewegung ausführende optische Achse des Abtastsystems stets im wesentlichen durch einen in der Lichtdurchtrittsöffnung liegenden festen Punkt verläuft.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.
- Fig.1: ist eine schematische Darstellung und veranschaulicht die Wirkungsweise des Suchers.
- Fig.2: zeigt einen Längsschnitt durch die Spitze eines Flugkörpers mit einem Sucher, der das Gesichtsfeld durch ein seitliches Fenster abtastet.
- Fig.3: zeigt die Halterung eines schwingbeweglichen Umlenkspiegels in der Struktur des Flugkörpers derart, daß der Umlenkspiegel um einen strukturfesten Punkt verschwenkbar ist, wobei sich der Umlenkspiegel in Fig.3 in einer Mittelstellung befindet.
- Fig.4: ist eine Darstellung der Halterung und des Umlenkspiegels in einer Auslenkstellung.

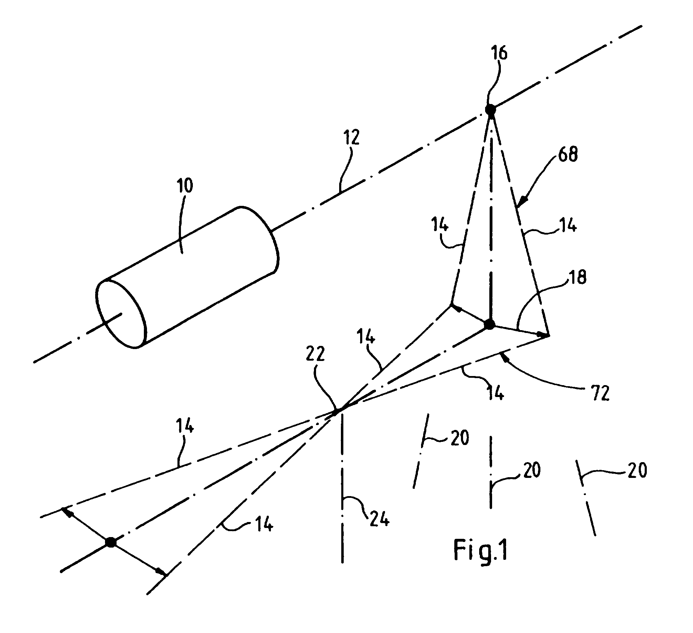

In Fig.1 ist mit 10 ein auf Infrarot ansprechender Detektor bezeichnet. Der Detektor 10 liegt auf einer Rollachse 12 die parallel zur Längsachse des Flugkörpers verläuft. Ein (in Fig.1 nicht dargestelltes) Abtastsystem hat eine optische Achse 14. Die optische Achse 14 verläuft längs der Rollachse 12, wird in einem auf der Rollachse 12 liegenden Punkt 16 umgelenkt und führt eine Schwingbewegung um die Rollachse 12 aus. Das ist in Fig.1 durch den Doppelpfeil 18 angedeutet. Außerdem führt die optische Achse 14 des Abtastsystems jedoch eine Schwingbewegung um eine (um die Rollachse schwingende) Gierachse aus. Die Gierachse ist mit 20 bezeichnet und in Fig.1 für die verschiedenen Winkellagen der optischen Achse 14 um die Rollachse 12 dargestellt. Die Schwingbewegung der optischen Achse 14 um die jeweilige Gierachse 20 ist so mit der Schwingbewegung der optischen Achse 14 um die Rollachse 12 koordiniert, daß die optische Achse 14 stets durch einen festen Punkt 22 geht und um eine "virtuelle Gierachse" 24 schwingt. Dieser Punkt 22 kann dann auf die Mitte des seitlichen Fensters des Flugkörpers gelegt werden.

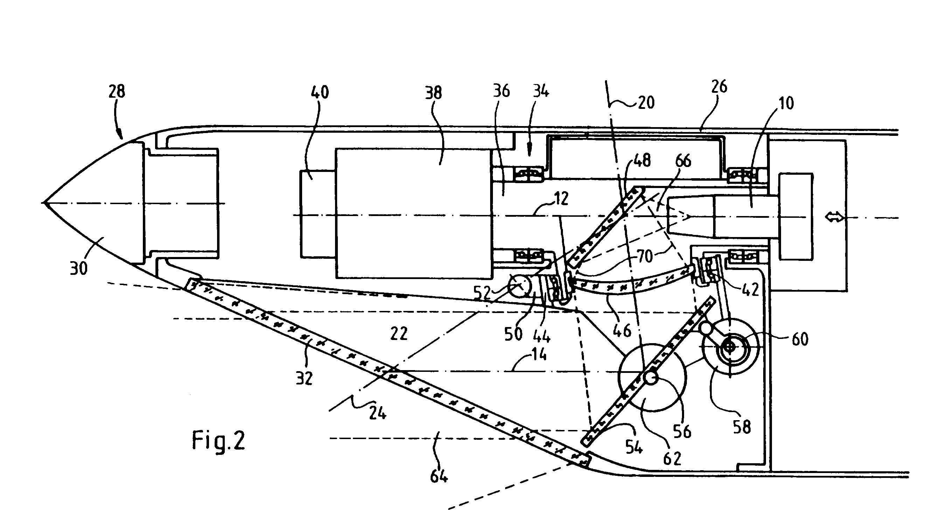

Eine konstruktive Realisierung dieses Prinzips ist in Fig.2 dargestellt.

Mit 26 ist ein Flugkörper bezeichnet. Der Flugkörper 26 ist ein Hochgeschwindigkeits-Flugkörper. Der Flugkörper 26 hat einen unsymmetrischen Vorderteil. In der gegenüber der Längsachse des Flugkörpers 26 versetzten Spitze 28 des Flugkörpers 26 sitzt ein mit Radar arbeitender Sucher 30. Solche Sucher sind an sich bekannt. Der Aufbau des Suchers 30 ist daher hier nicht näher beschrieben. An die Spitze 28 schließt sich ein ebenes Fenster 32 an. Das Fenster 32 ist durchlässig für Infrarot. Ein mit Infrarot arbeitender Sucher 34 ist hinter der Spitze 28 und hinter dem Fenster 32 angeordnet. Der Sucher 34 enthält den auf Infrarot ansprechenden Detektor 10 sowie ein optisches Abtastsystem mit einer schwingbeweglichen optischen Achse. Der Sucher 34 beobachtet durch das Fenster 32 hindurch ein in Flugrichtung des Flugkörpers liegendes Gesichtsfeld.

Der Sucher 34 enthält einen Rollrahmen 36. Der Rollrahmen 36 ist durch einen Drehmomenterzeuger 38 um die zur Längsachse des Flugkörpers parallele Rollachse 12 antreibbar. Die Bewegung des Drehmomenterzeugers 38 um die Rollachse 12 wird durch einen Winkelabgriff 40 überwacht. Der Detektor 10 sitzt auch in Fig.2 strukturfest auf der strukturfesten Rollachse. Der Drehmomenterzeuger 38 wird so angesteuert, daß der Rollrahmen 36 eine definierte Schwingbewegung um die Rollachse 12 ausführt.

In Lagern 42 ist in dem Rollrahmen 36 ein Gierrahmen 44 um eine reale Gierachse 20 (Fig.1) drehbar gelagert.

Der Rollrahmen 36 enthält eine Abbildungslinse 46 und einen planen Umlenkspiegel 48. Die Abbildungslinse 46 ist gleichachsig zu der Gierachse 20 angeordnet. Der Umlenkspiegel 48 sitzt im Strahlengang zwischen der Abbildungslinse 46 und dem Detektor 10. Der Umlenkspiegel 48 ist gegen die Gierachse 20 geneigt. Der Gierrahmen 44 ist mittels eines Armes 50 um einen außerhalb der Gierachse 20 liegenden, strukturfesten Punkt 52 schwenkbar gehalten. Das führt dazu, daß bei einer Schwingbewegung des Rollrahmens 34 um die Rollachse 12 der Gierrahmen 44 eine Schwingbewegung um die Gierachse 20 ausführt.

Der Strahlengang des Abtastsystems geht weiterhin über einen planen Umlenkspiegel 54. Der Umlenkspiegel 54 sitzt am Gierrahmen 44 und Der Umlenkspiegel 54 ist um eine Nickachse 56 schwingbeweglich an dem Gierrahmen gelagert. Der Umlenkspiegel 54 ist von einem Drehmomenterzeuger 58 über einen Kurbeltrieb 60 antreibbar und führt eine Schwingbewegung um die Nickachse 56 aus. Die Bewegung des Umlenkspiegels 54 um die Nickachse 56 ist durch einen Winkelabgriff 62 abgreifbar.

Der Strahlengang des abbildenden Lichtbündels 64 mit der optischen Achse 14 verläuft durch das Fenster 32, über den Umlenkspiegel 54, durch die Abbildungslinse 46 und über den Umlenkspiegel 48 und wird auf dem Detektor 10 gesammelt. Bei der Schwingbewegung des Rollrahmens 36 und des Umlenkspiegels 54 führt die optische Achse 14 eine zweidimensionale Abtastbewegung aus, so daß das Gesichtsfeld abgetastet wird. Der Umlenkspiegel 54 richtet dabei die optische Achse 14 im wesentlichen in Flugrichtung des Flugkörpers 26 durch das Fenster 32. Die jeweilige Richtung der optischen Achse 14 und des abbildenden Lichtbündels 64 ist durch die Winkelabgriffe 40 und 62 abgreifbar.

In Fig.2 sind der Rollrahmen 36, der Umlenkspiegel 48 (mit dem Gierrahmen 44) und der Umlenkspiegel 54 in ihrer Mittellage dargestellt. Die Anordnung ist dabei symmetrisch zur Papierebene von Fig.2. Bei einer Verdrehung des Rollrahmens 36 im Uhrzeigersinn gesehen von rechts in Fig.2 werden die Abbildungslinse 46 und der Umlenkspiegel 48 mit dem Gierrahmen 44 nach vorn aus der Papierebene von Fig.2 herausbewegt. Der von dem feststehenden Detektor 10 ausgehende, divergierende Strahlengang 66 verläuft dann auch aus der Papierebene von Fig.2 nach vorn heraus zu dem Umlenkspiegel 48 und der Abbildungslinse 46. Das entspricht etwa dem in Fig.1 bei 68 dargestellten Verlauf der optischen Achse 14. Da der Gierrahmen 44 um den außerhalb der Gierachse 20 liegenden strukturfesten Punkt 52 schwenkbar gelagert ist, erfolgt bei dieser "Nachvornbewegung" des Gierrahmens 44 gleichzeitig eine Verdrehung des Gierrahmens um die Gierachse 20 entgegen dem Uhrzeigersinn bei Betrachtung von oben in Fig.2. Dadurch wird der Umlenkspiegel 48 um die Gierachse 20 entsprechend verdreht. Der davon reflektierte Bündelabschnitt 70 wird nach hinten in Fig.2 verschwenkt. Das entspricht dem bei 72 in Fig.1 dargestellten Verlauf der optischen Achse 14. Dadurch wird der Nachvornbewegung des Gierrahmens 44 bei der Schwingbewegung des Rollrahmens 34 entgegengewirkt. Entsprechendes mit umgekehrtem Vorzeichen tritt ein, wenn bei der Schwingbewegung des Rollrahmens 36 der Gierrahmen 44 nach hinten in Fig.2, also hinter die Papierebene, bewegt wird. Bei geeigneter Wahl der Abmessungen kann erreicht werden, daß die optische Achse 14 bei zunächst als in der Mittelstellung stillstehend angenommenem Umlenkspiegel 54 stets durch den festen Punkt 22 auf dem Fenster 32 hindurchgeht und um eine "virtuelle Gierachse" 24 schwingt. Das Fenster 32 braucht dann im wesentlichen nur so breit zu sein, daß es den Querschnitt des abbildenden Lichtbündels 64 durchläßt. Es tritt keine Abdeckung des Lichtbündels 64 durch die Begrenzungen des Fensters bei der Schwingbewegung des abbildenden Lichtbündels 64 auf.

Bei einer zusätzlichen Schwingbewegung des Ablenkspiegels 54 um die Nickachse 56 zur zweidimensionalen Abtastung des Gesichtsfeldes verlagert sich der Strahlengang für größere Schwenkwinkel des Ablenkspiegels seitlich aus der Mitte des Fensters 32 heraus. Die Anordnung wird so optimiert, daß die Bewegung des abbildenden Lichtbündels im Bereich des Fensters 32 möglichst klein wird.

Es ist möglich, die Lage des Punktes 52 durch einen Motor mit Positionssteuerung nachzuregeln. Dabei kann entweder eine seitliche Verschiebung des Punktes 52 erfolgen oder es kann die Länge des Hebels am Gierrahmen 44, d.h. der Abstand des Punktes 52 von der Gierachse 20, verändert werden.

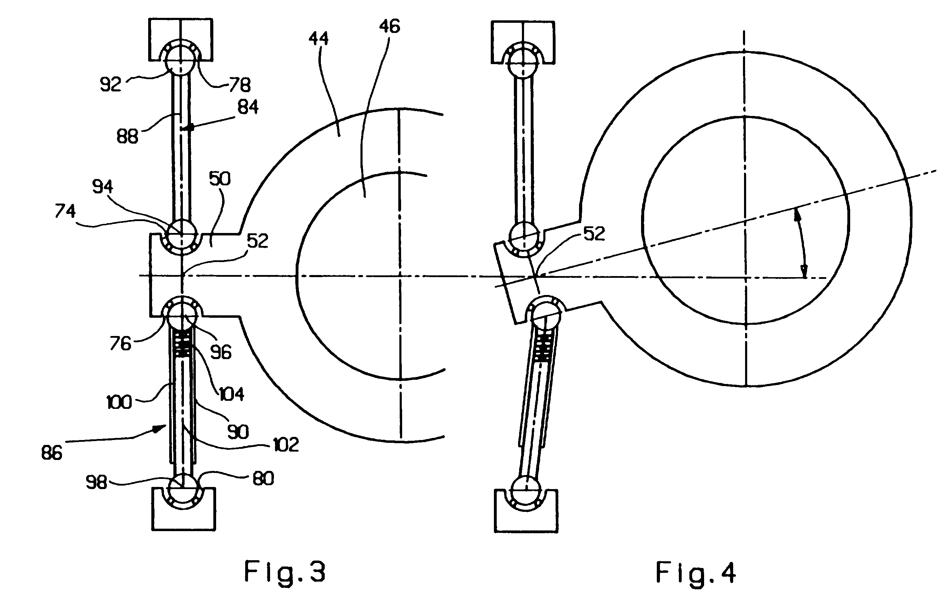

Fig.3 und 4 zeigt eine konstruktive Lösung, wie der Punkt 52 festgelegt werden kann.

An dem Gierrahmen 44 ist der Arm 50 angebracht. An dem Arm 50 sind auf gegenüberliegenden Seiten halbkugelige Vertiefungen 74, 76 angebracht. Den Vertiefungen 74 und 76 im Abstand gegenüberliegend sind an der Struktur des Flugkörpers 26 halbkugelige Vertiefungen 78 bzw. 80 vorgesehen. Druckstücke 82 bzw. 84 sind von je einer Stange 88 bzw.90 mit Gelenkkugeln 92, 94 bzw. 96,98 gebildet. Diese Druckstücke 84 und 86 sind mit je einer Gelenkkugel 92 bzw. 98 in einer der strukturfesten, halbkugeligen Vertiefungen 78 bzw. 80 abgestützt und greifen mit den anderen Gelenkkugeln 94 bzw. 96 in die halbkugeligen Vertiefungen 74 bzw. 76 des Armes 50 ein. Die Stange 90 besteht aus zwei teleskopartig ineinandergreifenden Teilen 100 und 102, die durch eine Schraubenfeder 104 auseinandergedrückt werden.

Wie aus Fig.4 ersichtlich ist, wird auf diese Weise der Gierrahmen 44 um einen im wesentlichen strukturfesten Punkt 52 schwenkbar gehalten, wobei aber die Haltemittel eine gewisse kinematisch erforderliche Ausgleichsbewegung gestatten.

## Patentansprüche

1. Sucher, bei welchem ein Gesichtsfeld durch ein optisches Abtastsystem mit einem feststehenden Detektor (10) und wenigstens einem schwingbeweglichen Spiegel (48) durch eine begrenzte Lichtdurchtrittsöffnung (32) hindurch abtastbar ist, **dadurch gekennzeichnet**, **daß** der schwingbewegliche Spiegel (48) durch einen Antriebsmechanismus (38, 50, 52) derart um zwei Achsen koordiniert antreibbar ist, daß die eine Abtastbewegung ausführende optische Achse (14) des Abtastsystems stets im wesentlichen durch einen in der Lichtdurchtrittsöffnung (32) liegenden festen Punkt (22) verläuft.

2. Sucher nach Anspruch 1, **dadurch gekennzeichnet**, **daß** über das optische Abtastsystem bei einem Flugkörper (26) ein in Flugrichtung des Flugkörpers liegendes Gesichtsfeld durch ein seitlich von der Spitze des Flugkörpers (26) vorgesehenes, zur Längsachse des Flugkörpers geneigtes Fenster (32) hindurch abtastbar ist, wobei dieses Fenster die besagte Lichtdurchtrittsöffnung bildet.

3. Sucher nach Anspruch 2, **dadurch gekennzeichnet**, **daß**
(a) das optische Abtastsystem einen durch einen ersten Antrieb (38) um eine Rollachse (12) schwingbeweglichen Rollrahmen (36) aufweist,
(b) der Detektor (10) feststehend auf der Rollachse (12) angeordnet ist,
(c) in dem Rollrahmen (36) ein erster Umlenkspiegel (48) mit einem Gierrahmen (44) um eine die Rollachse (12) schneidende Gierachse (20) drehbar gelagert ist, wobei der Umlenkspiegel (48) geneigt zu der Gierachse (20) angeordnet ist,
(d) ein zweiter Umlenkspiegel (54) um eine zu der Gierachse (20) senkrechte Nickachse (56) schwenkbar angeordnet ist,
(e) der erste Umlenkspiegel (48) gegen den Rollrahmen (36) derart schwingbeweglich ist, daß die optische Achse (14) des Abtastsystems bei einer Mittelstellung des zweiten Umlenkspiegels (54) bei der Abtastbewegung durch den ersten Umlenkspiegel (48) im wesentlichen stets durch einen in dem Fenster (32) liegenden Punkt verläuft.

4. Sucher nach Anspruch 3, **dadurch gekennzeichnet, daß** der erste Umlenkspiegel (48) um einen außerhalb der Gierachse (20) liegenden Punkt (52) schwenkbar gelagert ist.

5. Sucher nach Anspruch3, **dadurch gekennzeichnet, daß** dem Rollrahmen (36) durch einen Drehmomenterzeuger (38) eine kontrollierte Schwingbewegung erteilbar ist.

6. Sucher nach Anspruch 3, **dadurch gekennzeichnet, daß** in dem Gierrahmen (44) eine mit der Gierachse (20) gleichachsige Abbildungsoptik (46) und der zu der Gierachse (20) geneigte Umlenkspiegel (48) gehaltert sind, die gemeinsam um die Gierachse (20) drehbar gelagert sind.

7. Sucher nach Anspruch 4, **dadurch gekennzeichnet**, **daß**
(a) an dem ersten Umlenkspiegel (48) ein radialer Arm (50) mit gegenüberliegenden, seitlichen, halbkugelförmigen Ausnehmungen (74,76) vorgesehen ist,
(b) in die halbkugeförmigen Ausnehmungen (74,76) von beiden Seiten mit Gelenkkugeln (94,96) versehene , allseitig schwenkbar an der Struktur abgestützte Druckstücke (84,86) eingreifen und
(c) eines der Druckstücke (86) axial federnd ausgebildet ist.

## Claims

1. Seeker, wherein an optical scanning system comprising a stationary detector (10) and at least one oscillatingly movable mirror (48) is arranged to scan a field of view through a limited light aperture (32) **characterized in that** the oscillatingly movable mirror (48) is arranged to be driven in coordinated manner about two axes by a driving mechanism (38,50,52) such that the optical axis (14) of the scanning system always passes through a fixed point (22) located in the light aperture (32).

2. Seeker as claimed in claim 1, **characterized in that** the optical scanning system is arranged in a missile (26) to scan a field of view lying in the flight direction of the missile through a window (32) provided lateral of the tip of the missile and inclined relative to the longitudinal axis of the missile, this widow representing said light aperture.

3. Seeker as claimed in claim 2, **characterized in that**
(a) the optical scanning system comprises a roll gimbal oscillatingly movable about a roll axis (12) by a first drive (38),
(b) the detector (10) is stationary on the roll axis (12),
(c) a first deflecting mirror (48) with a yaw gimbal (44) is rotatably mounted in the roll gimbal (36), the deflecting mirror being inclined with respect to the yaw axis (20),
(d) a second deflecting mirror (54) is pivotally mounted about a pitch axis (56) orthogonal to the yaw axis (20),
(e) the first deflecting mirror (48) is oscillatingly movable relative to the roll gimbal (36) such that the optical axis (14) of the scanning system, in a central position of the second deflecting mirror (54) substantially passes through a point lying in the window, when the first deflecting mirror (48) makes a scanning movement.

4. Seeker as claimed in claim 3, **characterized in that** the first deflecting mirror is pivotable about a point (52) located outside the yaw axis (20).

5. Seeker as claimed in claim 3, **characterized in that** a torquer (38) is arranged to impart a controlled oscillatory movement to the roll gimbal (36).

6. Seeker as claimed in claim 3, **characterized in that** an imaging optical system (46) coaxial with the yaw axis (20) and the deflecting mirror (48) inclined with respect to the yaw axis (20) are provided in the yaw gimbal (44) and are, together, rotatable about the yaw axis.

7. Seeker as claimed in claim 4, **characterized in that**
(a) a radial arm (50) with opposite, lateral, hemispherical recesses (74,76) is provided at the first deflecting mirror (48),
(b) thrust pieces (84,86) provided with joint balls (94,96) and universally movably supported on the structure engage the two hemispherical recesses (74,76), and
(c) one of the thrust pieces (86) is axially resilient.

## Revendications

1. Chercheur pour lequel un champ de vision est susceptible d'être exploré à travers une ouverture délimitée pour le passage de la lumière (32) par un système optique d'exploration muni d'un détecteur fixe (10) et d'au moins un miroir à déplacement oscillatoire (48), **caractérisé par le fait que** le miroir à déplacement oscillatoire (48) est susceptible d'être actionné de façon coordonnée par un mécanisme d'actionnement (38, 50, 52) autour de deux axes de telle façon que l'axe optique (14) du système d'exploration exécutant un déplacement d'exploration s'étend continuellement essentiellement à travers un point (22) fixe situé dans l'ouverture pour le passage de la lumière (32).

2. Chercheur selon la revendication 1, **caractérisé par le fait qu**'un champ de vision se trouvant en direction de vol du missile est susceptible d'être exploré pour un missile par l'intermédiaire du système optique d'exploration à travers une fenêtre (32) inclinée par rapport à l'axe longitudinal du missile et prévue latéralement par rapport à la tête du missile (26), cette fenêtre formant ladite ouverture pour le passage de la lumière.

3. Chercheur selon la revendication 2, **caractérisé par le fait que**
(a) le système optique d'exploration présente un cadre de roulis (36) oscillant autour d'un axe de roulis (12) par un premier actionnement (38),
(b) le détecteur (10) est disposé fixement sur l'axe de roulis (12),
(c) un premier miroir de déviation (48) muni d'un cadre de lacet (44) est logé de façon susceptible de tourner dans le cadre de roulis (36) autour d'un axe de lacet (20) coupant l'axe de roulis (12), le miroir de déviation (48) étant disposé incliné par rapport à l'axe de lacet (20),
(d) un second miroir de déviation (54) est disposé de façon susceptible de pivoter autour d'un axe de tangage (56) vertical par rapport à l'axe de lacet (20),
(e) le premier miroir de déviation (48) oscille par rapport au cadre de roulis (36) de telle façon que l'axe optique (14) du système d'exploration s'étend en position intermédiaire du second miroir de déviation (54) lors du déplacement d'exploration par le premier miroir de déviation (48) essentiellement continuellement à travers un point situé dans la fenêtre (32).

4. Chercheur selon la revendication 3, **caractérisé par le fait que** le premier miroir de déviation (48) est logé de façon susceptible de pivoter autour d'un point (52) situé à l'extérieur de l'axe de lacet (20).

5. Chercheur selon la revendication 3, **caractérisé par le fait qu'une** oscillation contrôlée est susceptible d'être communiquée au cadre de roulis (36) par un moteur-couple (38).

6. Chercheur selon la revendication 3, **caractérisé par le fait qu'une** optique de reproduction (46) équiaxiale à l'axe de lacet (20) et que le miroir de déviation (48) incliné par rapport à l'axe de lacet (20), logés tous les deux de façon susceptible de tourner autour de l'axe de lacet (20), sont fixés dans l'axe de lacet (44).

7. Chercheur selon la revendication 4, **caractérisé par le fait que**
(a) un bras radial (50) muni de creux (74,76) hémisphériques, latéraux et opposés l'un à l'autre sont prévus au premier miroir de déviation (48),
(b) des membres de pression (84,86) appuyés à la structure de façon susceptible de pivoter de tous les côtés et pourvus des deux côtés de billes d'articulation (94,96) mordent à l'intérieur des creux hémisphériques (74,76) et
(c) l'un des membres de pression (86) est développé axialement de façon à faire ressort.
